# EUROPEAN PATENT APPLICATION

(11) **EP 4 537 964 A1**
(43) Date of publication of application: **16.04.2025**
(21) Application number: 23203550.1
(22) Date of filing: 13.10.2023
(51) Int. Cl.: B23B 27/16

(54) **TURNING TOOL AND METHOD FOR MOUNTING A CUTTING INSERT IN A SEAT OF A TURNING TOOL**

(71) Applicant: AB Sandvik Coromant, 811 81 Sandviken (SE)
(72) Inventor: WICKSTRÖM, David, 811 81 Sandviken (SE); LÖF, Ronnie, 811 81 Sandviken (SE); WIKBLAD, Krister, 811 81 Sandviken (SE)
(74) Representative: Sandvik

(57) **Abstract**

The invention relates to a turning tool comprising a tool body (1) including a seat (2) for accommodating a cutting insert (10) that comprises a first side (32), a second side (33) opposite the first side, and a peripheral surface (11) extending between the first side (32) and the second side (33). The seat (2) comprises a bottom surface (3), a first wall surface (4) and an opposite second wall surface (5). Each of the first wall surface (4) and the second wall surface (5) comprises at least one non-adjustable contact portion (21, 22, 23). The turning tool further comprises an actuating member (6) providing an adjustable contact portion (20) in the seat (2). The actuating member is controllable to move the adjustable contact portion in relation to the first and/or second wall surface of the seat such that, when the cutting insert (10) is mounted in the seat (2), the adjustable contact portion (20) is moveable between an active position, in which the adjustable contact portion (20) is in contact with and supports the peripheral surface (11) of the cutting insert (10), and a non-active position, in which the adjustable contact portion (20) is spaced from the peripheral surface (11) of the cutting insert (10). The invention also relates to a method for mounting a cutting insert in the seat of a tool body of a turning tool.

## Description

### TECHNICAL FIELD

The invention relates to turning tools for metal cutting.

### BACKGROUND ART

Turning is a common metal cutting operation wherein a turning tool is used to cut a rotating workpiece. Such turning tool often includes a cutting insert, for example made from cemented carbide. The cutting insert is mounted in a seat arranged in the turning tool, for example using a screw or some other fastening mechanism. When mounted in the seat, the cutting insert should be supported not only by the bottom surface of the seat, but also by portions of wall surfaces of the seat. For a stable and robust positioning within the seat, the cutting insert is often supported at three distinct contact portions or points along the wall surface of the seat. Such configuration with three contact points will provide a relatively stable mounting, in particular if machining in only one feed direction, and is insensitive to small variations of the geometry of individual cutting inserts. Such variations may arise for example due to production related issues or wear of the cutting insert.

However, sometimes it might be beneficial to have more than three, such as four, contact points along the wall surface of the insert seat. Some turning tools therefore include some kind of flexible or moveable element arranged in the seat that will adapt to variations in the insert geometry and automatically provide for contact between the cutting insert and the wall surface of the seat at more than three contact points. As an example, US6481936 discloses a turning tool wherein a slidably rotatable member, that includes two abutment surfaces, is arranged at one of the sides of the seat.

However, even though providing a fourth contact point, such solutions are complex and fragile due to the flexible or moveable element, and will often still not provide a sufficiently stable positioning of the cutting insert. In fact, such arrangements might be less robust than conventional three-point supports.

Hence, there is a need for turning tools with means for improved mounting of cutting inserts in the seats thereof.

### SUMMARY

It is an object of the present invention to mitigate the shortcomings of the prior art and to provide a turning tool wherein the mounting of a cutting insert is stable and robust, even if the cutting insert has slight geometric deviations from what is intended. Another object is to provide a turning tool in which a cutting insert can be securely mounted and get sufficient support irrespective of which feed direction that is used when machining a workpiece with the turning tool.

Thus, according to a first aspect, the invention relates to turning tool comprising a tool body including a seat for accommodating a cutting insert that comprises a first side, a second side opposite the first side, and a peripheral surface extending between the first side and the second side. The seat comprises a bottom surface, a first wall surface and an opposite second wall surface. Each of the first wall surface and the second wall surface comprises at least one non-adjustable contact portion, wherein the non-adjustable contact portions are arranged such that, when the cutting insert is mounted in the seat with the second side of the cutting insert resting upon the bottom surface of the seat, each of the non-adjustable contact portions is in contact with the peripheral surface of the cutting insert. The turning tool further comprises an actuating member providing an adjustable contact portion in the seat, wherein the actuating member is controllable to move the adjustable contact portion in relation to the first and/or second wall surface of the seat such that, when the cutting insert is mounted in the seat, the adjustable contact portion is moveable between an active position, in which the adjustable contact portion is in contact with and supports the peripheral surface of the cutting insert, and a non-active position, in which the adjustable contact portion is spaced from the peripheral surface of the cutting insert.

Thereby, robust and adaptable mounting of a cutting insert is obtained, wherein the degree of engagement of the adjustable contact portion with respect to the peripheral surface of the cutting insert, e.g., the force by which the adjustable cutting portion is pressed against the peripheral surface, is selectively controllable. Preferably, there is only one adjustable contact portion, resulting in a robust and user-friendly arrangement. There may be a total of three non-adjustable contact portions, two arranged in one wall surface and one in the other wall surface. Thereby, the cutting insert will be supported at a total of four contact portions when the insert is mounted in the seat.

The inventors have found that an arrangement with four contact points, two in each wall surface, is particularly beneficial for increasing the versatility of the turning tool, since the tool will be equally suitable for machining in any feed direction, e.g., both in the feed direction that the first wall surface faces and in the feed direction that the second wall surface faces. In contrast, a conventional three-point support, wherein only one of the wall surfaces has two contact portions, would, due to the direction of the resulting forces, be suitable only for machining in the feed direction that is faced by the wall surface having a single contact portion.

The actuating member is controllable to move the adjustable contact portion in relation to the first and/or second wall surface such that the contact portion can be selectively controlled to, at least to some degree, extend into a seat space formed between the bottom surface and the first and second wall surfaces of the seat. The adjustable contact portion is thus controllable, via the actuating member, to move further in to, or out from, such seat space.

The active position of the adjustable contact portion thus corresponds to a position wherein the adjustable contact portion extends sufficiently far into the seat space to contact the peripheral surface of the cutting insert when the cutting insert is mounted in the seat.

Correspondingly, the non-active position of the adjustable contact portion corresponds to a position wherein the adjustable contact portion is at least to some extent withdrawn from the seat space, such as to be spaced from the peripheral surface of the cutting insert when the cutting insert is mounted in the seat.

The non-adjustable contact portions may correspond to, or be parts of, protruding regions of the respective first and second wall surfaces, i.e. regions that, with respect to adjacent regions of the wall surfaces, slightly protrude into the seat space. The protruding regions may be flat or slightly convex surfaces.

The second wall surface being *opposite* to the first wall surface should be understood as covering any arrangement wherein the two wall surfaces to some extent face each other, in contrast to facing away from each other or extending in the same plane and facing the same direction. However, "opposite" should not in this case be understood as requiring that the wall surfaces extend in respective planes that are parallel. On the contrary, the first and second wall surfaces would usually be inclined with respect to each other. For example, a seat in a turning tool arranged to accommodate a conventional cutting insert having a generally rhombic shape, would have wall surfaces that generally extend in respective planes that meet at an angle that corresponds to the nose angle of the cutting insert.

According to some embodiments, the first wall surface has two non-adjustable contact portions, and the second wall surface has one non-adjustable contact portion, wherein the adjustable contact portion is located in the second wall surface, or in an extension plane in which the second wall surface generally extends. The adjustable contact portion, in relation to the non-adjustable contact portion in the second wall surface, may be located closer to a proximal end of the seat. Thereby, the adjustable contact portion and the actuating member required for controlling the movement of the adjustable contact portion can be arranged in the tool body at an increased distance from a distal end of the seat. This could potentially limit negative effects on the strength and durability of the tool body caused by the presence of an actuating member. In other embodiments, for accessibility reasons, it might be better to arrange the adjustable contact portion differently, such that the adjustable contact portion, in relation to the non-adjustable contact portion in the second wall surface, is located closer to a distal end of the seat.

A proximal end of the seat, as used herein, should be understood as the end position of the seat that is most proximal with respect to the tool body, thus furthest from the cutting zone when the turning tool is engaged in cutting. Correspondingly, the distal end of the seat is the end opposite the proximal end, i.e. the end of the seat that is closest to the cutting zone when the turning tool is engaged in cutting.

According to some embodiment, the actuating member is a screw extending within, and being threadedly engaged with, a hole in the tool body. In such embodiments, the movement of the adjustable contact portion between the active position and the non-active position is effectuated by rotation of the screw, which is a simple and robust solution.

According to some embodiments, the peripheral surface of a head of the screw forms the adjustable contact portion.

In other embodiments, the screw extends through a hole that opens in the second wall surface, wherein a front portion of the screw forms the adjustable contact portion. The front portion of the screw may be movably attached to the rest of the screw, for example by being formed by a semi-spherical ball element arranged within a recess in the front of the screw, with a flat portion of the semispherical ball facing the peripheral surface of the cutting insert. Such arrangement will provide a slight adaptability of the adjustable contact portion with respect to the peripheral surface of the cutting insert that it is arranged to contact. Thereby, the risk of damaging the cutting insert when moving the adjustable contact portion into the active position is reduced. According to some embodiments, the front portion of the screw is made of a softer material than the rest of the screw. For example, the screw may be made from steel but the front portion from brass. Thereby, the adjustable contact portion will to some extent be able to adapt to the peripheral surface of the cutting insert (that is usually made from cemented carbide, which is significantly harder than brass) and the risk of damaging the peripheral surface of the cutting insert is reduced.

According to some embodiments, the screw extends in a direction toward a reference plane that passes through the proximal end of the seat and that is perpendicular to the bottom surface and to the second wall surface. For example, the screw may extend at an angle α in the range 10° - 20° to the reference plane, such as at an angle of about 15°. Such extension of the screw may provide a good support while reducing the risk that the adjustable contact portion influences the position of the cutting insert within the seat, i.e., accidently pushes the cutting insert toward a distal end of the insert seat.

According to some embodiments, the screw extends in a direction toward a bottom plane in which the bottom surface extends. For example, the screw may extend at an angle β in the range 5° - 20° to the bottom plane, such as at an angle of about 12° - 13°. Such extension of the screw may provide a good support while reducing the risk that the adjustable contact portion influences the position of the cutting insert within the seat, i.e., accidently pushes the cutting insert toward a distal end of the insert seat.

According to alternative embodiments, the actuating member, e.g., the screw, does not directly engage the peripheral surface of the cutting insert. In such embodiments, the adjustable contact portion is not formed by a part of the actuating member. Instead, the actuating member may act upon a moveable member arranged between the actuating member and the seat space, such that a portion of the moveable member forms the adjustable contact portion. For example, such movable member may be fixedly arranged to the tool body only at one end thereof, and its stiffness sufficiently small such that it will bend towards and into contact with the peripheral surface of the cutting insert when engaged by the actuating member from the other side.

According to a second aspect, the invention relates to a method for mounting a cutting insert in the seat of a tool body of a turning tool according to any of the embodiments described herein, wherein the cutting insert includes a first side, a second side opposite the first side, and a peripheral surface extending between the first side and the second side, and wherein the method comprises the steps of:
- arranging the cutting insert in the seat such that all non-adjustable contact portions in the seat are in contact with the peripheral surface of the cutting insert,
- fixating the cutting insert within the seat, and
- moving, via the actuating member, the adjustable contact portion from a non-active position to an active position, such that the adjustable contact portion is in contact with the peripheral surface of the cutting insert.

The cutting insert may be fixed in the seat by a fastening element. The fastening element may be a screw extending through the cutting insert into a threaded hole in the bottom surface of the seat. Alternatively, the cutting insert may be fixed by other means, for example using a clamping device engaging the cutting insert from above.

As discussed previously, the adjustable contact portion is moved by control of the actuating member from the non-active position, in which the adjustable contact portion is spaced from the peripheral surface of the cutting insert, towards and into contact with the peripheral surface of the cutting insert. The adjustable contact portion may be moved such that it presses against the peripheral surface of the cutting insert with a force that is sufficiently large to provide a stable support but sufficiently small to not displace or damage the cutting insert. For example, the actuating member, e.g., the screw, may be controlled to apply a torque as small as 2 newton-meters or less, such as 1 newton-meter, which has been found to provide sufficient support without displacing the cutting insert within the seat.

### BRIEF DESCRIPTION OF DRAWINGS

The solution will now be described in more detail by means of exemplary embodiments and with reference to the accompanying drawings, in which:
Fig. 1 is a perspective view of a turning tool according to a first embodiment.
Fig. 2 is a perspective view of the turning tool in fig. 1 as seen from a different direction.
Figs. 3 is a another perspective view of the turning tool according to the first embodiment but with a cutting insert arranged thereto.
Fig. 4 is a top view of the turning tool in fig. 3.
Fig. 5 is a perspective view of a turning tool according to a second embodiment.
Fig. 6 is a top view of the turning tool according to the second embodiment.
Fig. 7 is a front view of the turning tool according to the second embodiment as seen from a direction VII indicated in fig. 6.
Fig. 8 is a top view of a part of a turning tool according to a third embodiment.
Fig. 9 is a cross-sectional view of the turning tool according to the third embodiment in a section IX-IX indicated in fig. 8.
Fig. 10 is a flowchart illustrating a method for mounting a cutting insert in the insert seat of a turning tool.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

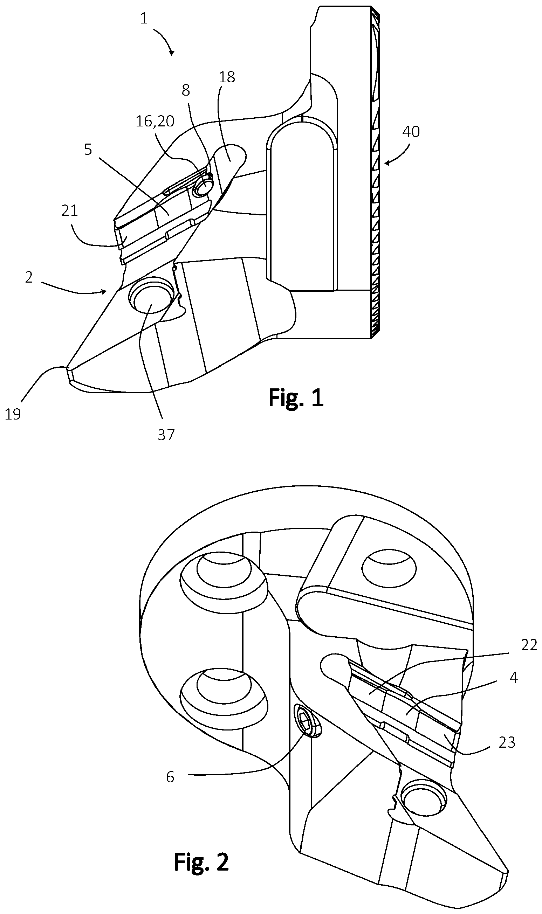

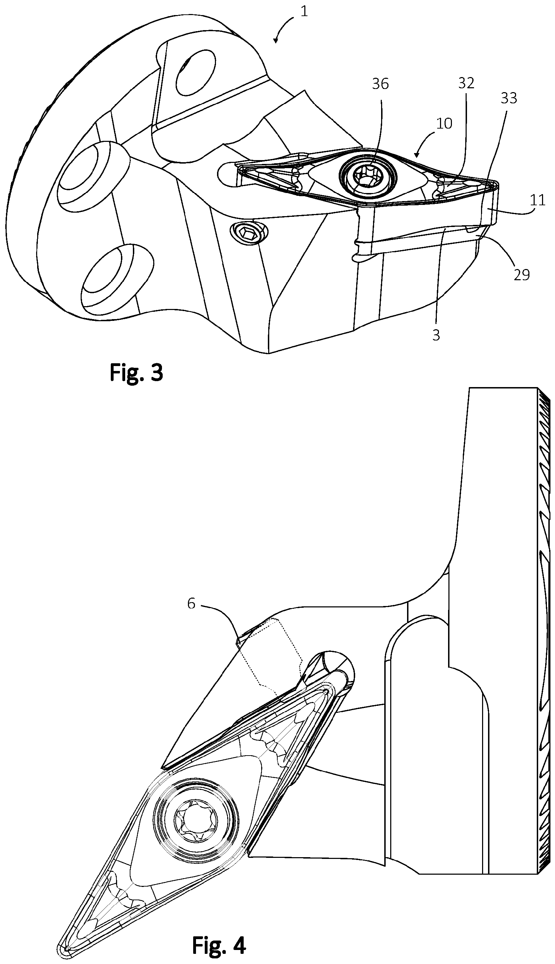

Figs. 1 and 2 are perspective views of a turning tool according to a first embodiment. In this embodiment, the turning tool corresponds to a cutting head of a modular tool and is configured to be attached, via an interface 40, to an adapter (not shown) that is mountable to a machine tool. The turning tool includes a tool body 1 having a seat 2 for accommodating a cutting insert 10 (shown in figs. 3 and 4) that comprises a first side 32, a second side 33 and a peripheral surface 11. The seat 2 comprises a bottom surface 3. In the illustrated embodiment, the seat 2 includes a shim 29 (illustrated in fig. 3), whereby the bottom surface 3 of the seat is formed by a top surface of the shim 29. The seat further includes a first wall surface 4 and an opposite second wall surface 5. The first wall surface 4 includes two non-adjustable contact portions 22, 23 in the form of flat protruding regions of the first wall surface. A similar non-adjustable contact portion 21 is located in the second wall surface 5. The seat has a proximal end 18 and a distal end 19. The turning tool includes an actuating member 6 which in the illustrated embodiment is in the form of a screw that extends through a hole 8 and passes through the tool body and opens in the second wall surface 5. The extension of the screw 6 is illustrated by dashed lines in fig. 4. The front portion 16 of the screw forms an adjustable contact portion 20 that by rotation of the screw is moveable with respect to the second wall surface 5, i.e. in to, or out from, a seat space formed between the bottom surface 3 and the first and second wall surfaces 4, 5. In relation to the non-adjustable contact portion 21 in the second wall surface, the adjustable contact portion 20 is located in the second wall surface at a position closer to the proximal end 18 of the seat 2.

When the cutting insert 10 is to be mounted within the seat 2, the actuating member 6 is controlled such that the adjustable contact portion 20 is at least partly withdrawn from the seat space, which, when the cutting insert 10 is located in the seat 2, corresponds to an in-active position in which the adjustable contact portion 20 is spaced from the peripheral surface 11 of the cutting insert 10.

A method for mounting a cutting insert in the seat of a turning tool will hereby be described with reference to figs 1-4 and fig. 10 which is a flowchart illustrating the method.

In a first step 101, the cutting insert 10 is arranged in the seat with (at least parts of) its second side resting upon the bottom surface 3 of the seat, such that the peripheral surface 11 of the cutting insert 10 is in contact with each of the non-adjustable contact portions 21, 22, 23. The non-adjustable contact portions 21, 22, 23 should be understood as the portions that are meant to actually make contact with the peripheral surface 11 of the cutting insert, which may not necessarily correspond to the full area of the protruding portions of the wall surfaces illustrated in the figures.

Then, in a second step 102, the cutting insert 10 is fixed within the seat. In the illustrated embodiment this is achieved by using a fastening screw 36 extending through a central hole in the cutting insert 10 and into a threaded fastening hole 37 in the tool body.

Such fastening of the cutting insert so far corresponds to conventional mounting of a turning insert supported at three points along the peripheral surface of the insert.

In a third step 103, the adjustable contact portion 20 is moved, by control of the actuating member 6, from a non-active position in which the adjustable contact portion 20 is spaced from the peripheral surface 11 of the cutting insert 10, towards and into contact with the peripheral surface 11 of the cutting insert 10, thereby assuming an active position in which the adjustable contact portion 20 is in contact with and supports the peripheral surface 11 of the cutting insert 10.

In the embodiment illustrated in figs. 1-4, where the actuating member 6 is a screw, this is achieved by rotating the screw 6 such that the adjustable contact portion 20, i.e. the front portion 16 of the screw, moves towards and makes contact with the peripheral surface 11 of the cutting insert 10. The active position preferable corresponds to a position in which the adjustable contact portion 20 presses against the peripheral surface 11 with a force that is sufficiently large to provide a stable support but sufficiently small to not displace the cutting insert 10 within the seat.

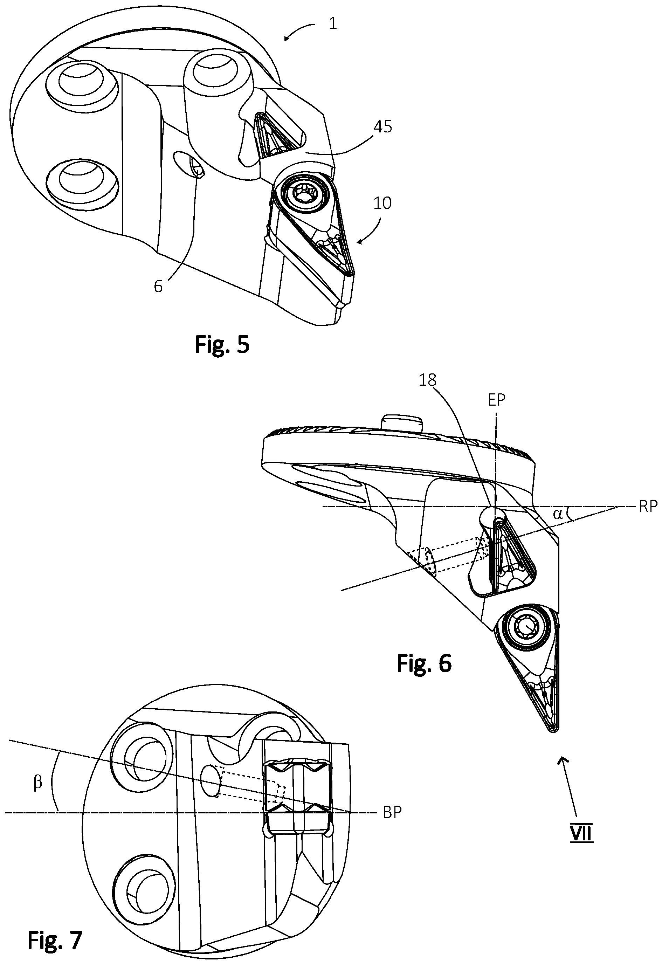

In the embodiment illustrated in figs. 1-4, the screw extends in a direction substantially perpendicular to the peripheral surface 11, meaning that the applied force is directed perpendicularly to the peripheral surface 11. In a second embodiment, illustrated in figs. 5-7, the screw extends in a direction that is non-perpendicular to the peripheral surface but inclined both with respect to a bottom plane BP in which the bottom surface 3 extends (illustrated in fig. 7), and with respect to a reference plane RP that is perpendicular to the bottom surface 3 and to the second wall surface 5 (illustrated in fig. 6). In the illustrated embodiment, the screw 6 extends at an angle α of 15° to the reference plane RP and at an angle β of 12.5° to the bottom plane BP.

In this embodiment, the walls of the seat are higher than the height of the cutting insert (the distance between the first and second surfaces of the cutting insert) such that a part of the tool body in the region where the seat is located extends above the cutting insert. A stiff member 45 extends as a bridge between upper parts of the seat walls. Such member may increase the strength and wear resistance of the seat 2. Moreover, such design wherein the seat walls extend above the cutting insert has the further benefit of also providing sufficient space in the tool body such that the hole 8, through which the screw 6 extends, can be arranged at an angle towards the bottom plane BP while still providing the adjustable contact portion at a suitable position with respect to the peripheral surface 11 of the cutting insert 10. In fig. 7, the adjustable contact portion (the front portion of the screw) seems to contact the peripheral surface 11 of the cutting insert at a location close to the bottom surface 3 of the seat 2. However, in other embodiments, the contact portion may engage the peripheral surface at a location closer to the first side 32 of the cutting insert, which would normally provide better support for the cutting insert.

The screw 6 may be made of steel, but the front portion 16 of the screw in the embodiments illustrated in figs. 1-7 may be made of a softer material, for example brass, such that the adjustable contact portion 20 to some extent adapts to the peripheral surface 11 of the cutting insert and does not damage it. Alternative means for obtaining a slight adaptability of the contact portion 20 could be to arrange the front portion 16 of the screw 6 such that it is movably attached to the rest of the screw. For example, this may be achieved by a front portion 16 formed by a semi-spherical ball element arranged within a recess in the front of the screw 6, with a flat portion of the semispherical ball facing the peripheral surface 11 of the cutting insert 10.

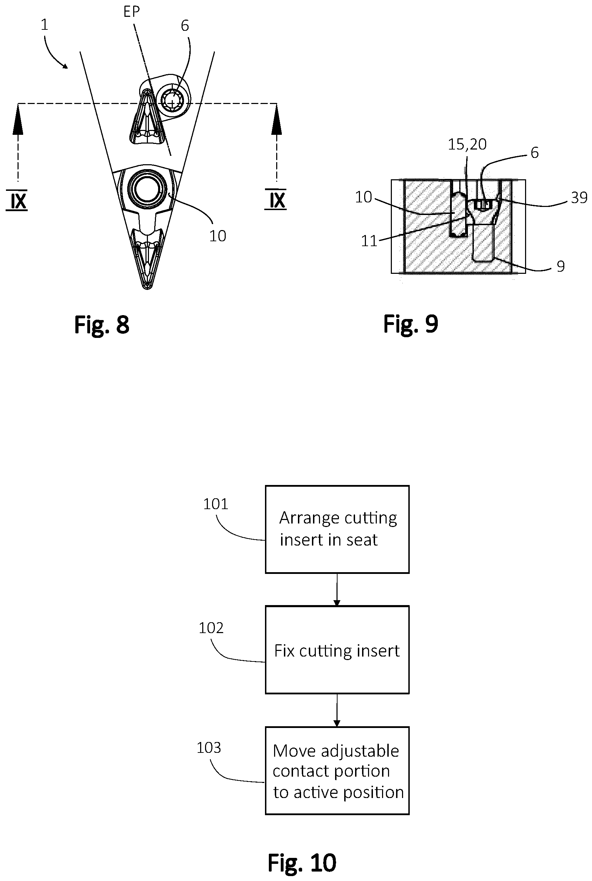

In figs. 8-9, a turning tool according to a third embodiment is described. Also in this embodiment the actuating member 6 is in the form of a screw, but in contrast to the previously described embodiments the screw extends within, and is threadedly engaged with, a hole 9 in the tool body that extends perpendicularly to the bottom surface 3 of the seat. A slanted surface 39 is located adjacent the hole 9, such that when the screw is moved into the hole 9, a peripheral surface of the screw head will slide against the slanted surface and as a consequence the screw will bend slightly in the direction opposite the slanted surface 39, i.e., towards the peripheral surface 11 of the cutting insert 10. A part of the peripheral surface 15 of the head of the screw 6 opposite the slanted surface 39 is located in an extension plane EP of the second wall surface 3. This part of the peripheral surface 15 will act as the adjustable contact portion 20 being forced into contact with the peripheral surface 11 of the cutting insert when the screw is moved down into the hole 9. The amount of force exerted by the peripheral surface 15 of the screw head upon the peripheral surface 11 of the cutting insert will depend on how far the screw 6 is screwed into the hole 9.

In an alternative embodiment, the slanted surface 39 may be omitted, and the screw hole 9 may instead be slightly inclined in a direction towards the cutting insert, such that the peripheral surface 15 of the head of the screw 6 by its own motion approaches and eventually contacts the peripheral surface of the cutting insert when the screw 6 moves into the hole.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited.

## Claims

1. A turning tool comprising a tool body (1) including a seat (2) for accommodating a cutting insert (10) that comprises a first side, a second side opposite the first side, and a peripheral surface extending between the first side and the second side, wherein the seat (2) comprises a bottom surface (3), a first wall surface (4) and an opposite second wall surface (5), and wherein each of the first wall surface (4) and the second wall surface (5) comprises at least one non-adjustable contact portion (21, 22, 23), wherein the non-adjustable contact portions (21, 22, 23) are arranged such that, when the cutting insert (10) is mounted in the seat (2) with the second side of the cutting insert (10) resting upon the bottom surface of the seat, each of the non-adjustable contact portions (21, 22, 23) is intended to contact the peripheral surface (11) of the cutting insert (10), **characterized in that** the turning tool comprises an actuating member (6) providing an adjustable contact portion (20) in the seat (2), wherein the actuating member is controllable to move the adjustable contact portion in relation to the first and/or second wall surface of the seat such that, when the cutting insert (10) is mounted in the seat (2), the adjustable contact portion (20) is moveable between an active position, in which the adjustable contact portion (20) is in contact with and supports the peripheral surface (11) of the cutting insert (10), and a non-active position, in which the adjustable contact portion (20) is spaced from the peripheral surface (11) of the cutting insert (10).

2. A turning tool according to claim 1, wherein the first wall surface (4) has two non-adjustable contact portions (22, 23) and the second wall surface (5) has one non-adjustable contact portion (21), and wherein the adjustable contact portion (20) is located in the second wall surface (5), or in an extension plane (EP) in which the second wall surface extends.

3. A turning tool according to claim 2, wherein the adjustable contact portion, in relation to the non-adjustable contact portion in the second wall surface, is located closer to a proximal end (18) of the seat.

4. A turning tool according to any of the previous claims, wherein the actuating member (6) is a screw extending within, and being threadedly engaged with, a hole (8, 9) in the tool body (1).

5. A turning tool according to claim 4, wherein a peripheral surface (15) of a head of the screw forms the adjustable contact portion.

6. A turning tool according to claim 4, wherein the screw extends through a hole (8) that opens in the second wall surface (4), and wherein a front portion (16) of the screw forms the adjustable contact portion.

7. A turning tool according to claim 6, wherein the front portion (16) of the screw is movably attached to the rest of the screw.

8. A turning tool according to any of the claims 6 and 7, wherein the front portion (16) of the screw is made of a softer material than the rest of the screw.

9. A turning tool according to any of the claims 6-8, wherein the screw extends in a direction toward a reference plane (RP) that passes through a proximal end (8) of the seat and that is perpendicular to the bottom surface and to the second wall surface.

10. A turning tool according to claim 9, wherein the screw extends at an angle (α) in the range 10° - 20° to the reference plane (RP).

11. A turning tool according to any of the claims 6-10, wherein the screw extends in a direction toward a bottom plane (BP) in which the bottom surface extends.

12. A turning tool according to claim 11, wherein the screw extends at an angle (β) in the range 5° - 20° to the bottom plane.

13. A method for mounting a cutting insert in the seat of a tool body of a turning tool according to any of the claims 1-12, wherein the cutting insert includes a first side, a second side opposite the first side, and a peripheral surface extending between the first side and the second side, and wherein the method comprises the steps of:
- arranging the cutting insert in the seat such that all non-adjustable contact portions in the seat are in contact with the peripheral surface of the cutting insert,
- fixating the cutting insert within the seat, and
- moving, via the actuating member, the adjustable contact portion from a non-active position to an active position, such that the adjustable contact portion is in contact with the peripheral surface of the cutting insert.

14. A method according to claim 13, wherein the adjustable contact portion is moved such that it presses against the peripheral surface of the cutting insert with a force that is sufficiently large to provide a stable support but sufficiently small to not displace the cutting insert.
